# EUROPEAN PATENT APPLICATION

(11) **EP 3 750 709 A1**
(43) Date of publication of application: **16.12.2020**
(21) Application number: 19179789.3
(22) Date of filing: 12.06.2019
(51) Int. Cl.: B33Y 70/00, B33Y 10/00, B29C 64/106, C08F 216/38, B29C 64/118

(54) **USE OF POLYVINYL ACETALS IN ADDITIVE MANUFACTURING PROCESS**

(71) Applicant: Kuraray Europe GmbH, 65795 Hattersheim (DE)
(72) Inventor: The designation of the inventor has not yet been filed
(74) Representative: Janßen, Christian Oliver

(57) **Abstract**

The invention is directed to the use of polyvinyl acetals in additive manufacturing processes, especially for 3D printing process.

## Description

The invention is directed to the use of polyvinyl acetals in additive manufacturing processes, especially for 3D printing processes.

Additive manufacturing is the technology to build three-dimensional objects by adding layer-upon-layer of material as opposed to producing the objects by taking material away, e.g. by carving or sculpturing. One example of an additive manufacturing process, which is gaining more and more importance in production of plastic parts, is the 3D printing process.

The use of polyvinyl butyrate (PVB) for 3D printing is known in the art. While the use of PVB for 3D printing has various advantages over the use of other materials, there are also certain drawbacks. For example, PVB has a rather low glass transition temperature (Tg) and therefore, the use of objects produced from PVB in very warm environments is limited as they might not possess the required thermal three-dimensional stability. Thus, there is still a need for improved materials for additive manufacturing technologies.

Therefore, one objective of the invention is to provide a process for the manufacture of a three-dimensional object with an improved material, e.g. using a material with improved production costs or raw material costs and/or an improved environmental footprint. Another objective of the present invention is to provide a process using a material with improved characteristics like an improved thermal three-dimensional stability, thermal stability, glass transition temperature, melting point, water uptake profile, better compatibility with other components of the printing material, e.g. pigments or dyes, less warping and/or improved post-processibility, especially improved polishing characteristics.

These and other objectives are surprisingly solved by the present invention.

The present invention provides a process for the additive manufacturing of a three-dimensional object wherein the three-dimensional object comprises, consists of or consists essentially of a polyvinyl acetal and wherein the polyvinyl acetal comprises at least two different acetal groups. Preferably, the acetal groups independently have 2 to 6 carbon atoms.

The term "additive manufacturing" as used herein shall mean the technology to build three-dimensional objects by adding layer-upon-layer of material. Additive manufacturing comprises different techniques, including but not limited to 3D printing, rapid prototyping, direct digital manufacturing, layered manufacturing, additive fabrication and selective laser sintering. Preferably, the additive manufacturing is 3D printing.

The term "consisting essentially of" shall mean that no other component is present that materially affects the characteristics of the material.

Polyvinyl acetals are polymers produced from the condensation of polyvinyl alcohol with aldehydes. For example, conventional polyvinyl butyrate (PVB) is produced by acetalisation of polyvinyl alcohol with butyric aldehyde. The polyvinyl acetals used in the inventive process are mixed acetals, i.e. they comprise at least two different acetal groups. In other words, the polyvinyl acetals as used in the invention comprise a first acetal group derived from the reaction of two hydroxyl groups of the respective polyvinyl alcohol with one aldehyde and at least a second acetal group derived from the reaction of two other hydroxyl groups of the respective polyvinyl alcohol with a second aldehyde, wherein the first aldehyde is different from the second aldehyde.

Preferably, the acetal groups individually have 2 to 6 carbon atoms, i.e. they derive from the condensation reaction with aldehydes with 2 to 6 carbon atoms. More preferably, they derive from at least two aldehydes chosen from the list consisting of methanal (formaldehyde), ethanol (acetaldehyde), n-propanal (propionaldehyde), isopropanol, n-butanal (butyraldehyde), iso-butanal, sec-butanal, tert-butanal, n-pentanal, neo-pentanal, iso-pentanal, sec-pentanal, sec-isopentanal and n-hexanal. Most preferably, they derive from the condensation reaction with acetaldehyde and butyraldehyde. Also preferably, they derive from the condensation reaction with three different aldehydes, more preferably acetaldehyde, butyraldehyde and iso-butyraldehyde.

The polyvinyl acetal can be supplied to the inventive process in various forms depending on the manufacturing technique used, e.g. as filaments for fused filament fabrication or as powders for bed fusion techniques. Preferably, the polyvinyl acetal is supplied to the manufacturing process in form of a filament, granules, beads or a powder, more preferably in form of a filament.

While a higher Tg of the polyvinyl acetals used in the inventive process is advantageous for the three-dimensional thermal stability of the objects produced, a high melting point is disadvantageous, e.g. in 3D printing, because the material has to melt in the nozzle of the 3D printer. These high temperatures can lead to a substantive degradation of the material used for 3D printing. It has now been surprisingly found that the inventive materials show an increased Tg as compared to conventional PVB while maintaining a softening temperature comparable to PVB. Accordingly, the polyvinyl acetals used in the inventive process preferably have a glass transition temperature (Tg) of equal to or higher than 50, 55, 60, 65, 70, or 75 ºC. Also preferably, they have a Tg of 125, 120, 115, 110, 105, or 100 ºC. More preferably, the polyvinyl acetals used in the inventive process have a Tg of 70 to 120 ºC, most preferably of 75 to 115 ºC. Glass transition temperature (Tg) is measured according to ISO 11357-1 (DSC method). Also preferably, the polyvinyl acetal has a softening temperature of 130 - 220 ºC, measured by the ring and ball method (DIN ISO 4625).

The glass transition temperature is determined by means of differential scanning calorimetry (DSC) in accordance with DIN 53765 with use of a heating rate of 10K/min at a temperature interval of minus 50 °C to 150 °C. A first heating ramp, followed by a cooling ramp, followed by a second heating ramp was used. The position of the glass transition temperature was established on the measurement curve associated with the second heating ramp in accordance with DIN 51007. The DIN midpoint (Tg DIN) was defined as the point of intersection of a horizontal line at half step height with the measurement curve. The step height was defined by the vertical distance of the two points of intersection of the middle tangent with the base lines of the measurement curve before and after glass transition.

The content of residual polyvinyl alcohol in the polyvinyl acetals used according to the present invention is preferably from 5 to 35% by weight, more preferably 10 to 30% by weight, and in particular 11 to 18% by weight.

Preferably, the degree of acetalisation in the polyvinyl acetals used in the inventive process is from 70 to 95%, preferably it is from 85 to 95%, specifically around 90%.

The polyvinyl alcohol content and polyvinyl acetate content of PVB were determined in accordance with DIN ISO 53401 (Acetate content) and DIN ISO 53240 (PVA content). The degree of acetalisation can be calculated as the remaining portion from the sum of polyvinyl alcohol content and polyvinyl acetate content determined in accordance with DIN ISO 53401/53240 needed to make one hundred. Conversion from % by weight into mol % is achieved by formulas known to the person skilled in the art.

During the printing process the polymer is heated up and molten at temperatures around 200 °C. Previously absorbed water will evaporate during melting and can cause flaws in the printed object e.g. bubbles, voids and surface defects. It has surprisingly been found the polyvinyl acetals used in the present invention have an advantageous water absorption profile as well as an improved total water content in equilibrium. Accordingly, the content of water in the polyvinyl acetals used in the inventive process is equal to or less than 2.5% by weight, more preferably equal to or less than 1% by weight as determined in accordance with DIN 53189.

Optionally, the material used for the inventive process comprises, other than the polyvinyl acetal, up to 20% by weight (based on the total weight of the composition) of one or more plasticizers. Any compound known to plasticize polyvinyl acetals may be used. Preferred plasticisers are diesters of aliphatic diols, in particular of aliphatic polyether diols and/or polyether polyols with aliphatic carboxylic acids, preferably diesters of polyalkylene oxides, in particular diesters of diethylene glycol, triethylene glycol and tetraethylene glycol with aliphatic (C6-C10) carboxylic acids, preferably 2-ethyl butyric acid and n-heptanoic acid, also diesters of aliphatic or aromatic (C2-C18) dicarboxylic acids, preferably adipine, sebacine and phthalic acid, with aliphatic (C4-C12) alcohols, preferably dihexyl adipate, phthalates, trimellitates, phosphates, fatty acid esters, in particular triethylene glycol-bis-(2-ethyl butyrate), triethylene glycol ethyl hexanoate (3G8), aromatic carboxylic acid esters, in particular dibenzoates and/or hydroxycarboxylic acid esters.

Also optionally, the material used for the inventive process comprises other components than the polyvinyl acetals as described above. For example, it may contain UV absorbers, antioxidants, optical brighteners, stabilisers, dyes, pigments, processing aids, organic or inorganic nanoparticles, pyrogenic silicic acid, surface-active substances and/or rheological modifiers.

The material used for the inventive process can also comprise other polymers different from the polyvinyl acetals described above. It can comprise one or more other polyvinyl acetal grades, differing in hydroxyl content and/or degree of polymerization and/or degree of acetate content and/or type of acetal. Alternatively, it can also comprise any polymer selected from the group consisting of polylactic acid (PLA), acrylonitrile-butadiene-styrene copolymer (ABS), polyamides (PA), polycarbonates (PC), polyethylene terephthalate (PET), polyethylene terephthalate copolymers (PETG), polyhydroxyalkanoates (PHA), wood filled composites, metal filled composites, carbon fiber filled composites, thermoplastic elastomers (TPE), thermoplastic polyurethanes (TPU), polyolefins, polypropylenes (PP), acrylonitrile styrene acrylate (ASA), polyacrylates, polymethacrylates, and mixtures thereof.

In case the material used in the inventive process comprises other components than the polyvinyl acetal, the material to be printed can be compounded by a process known to the skilled person, e.g. using an extruder. In case filaments are used for the 3D printing process, they can be prepared by processes known to the skilled person, e.g. by extrusion in a twin screw extruder from a powder or from pre-formed pellets in a single screw extruder.

Alternatively, compounding and filament extrusion can be achieved in one step, e.g. on a DSM Xplore micro compounder MC 15.

Due to the process of subsequently depositing drops of the thermoplastic polymer, certain structures like hollow sections or arches cannot be manufactured directly from the thermoplastic polymer. In such cases, a support structure is printed in a first step on which the final object is printed as a second step. The support structure is prepared from a thermoplastic polymer which can be removed later without destroying the printed object, e.g. by dissolution. Polyvinyl alcohol can be used as support structure since it can be easily removed from the final printed structure by dissolving in water.

It has now been surprisingly found that the polyvinyl acetals as described above show an improved compatibility with the common support materials, especially with polyvinyl alcohol. Accordingly, the process according to the inventive further comprises
- a step of depositing and solidifying a molten thermoplastic polymer different from the polyvinyl acetal to form a support structure,
- depositing and solidifying the molten polyvinyl acetal onto the support structure to form a three-dimensional preform, and
- dissolving the support structure to form the three-dimensional object.

More preferably, the thermoplastic polymer support structure comprises polyvinyl alcohol (PVOH).

Another aspect of the present invention is the use of a polyvinyl acetal comprising at least two different acetal groups wherein the acetal groups independently have 2 to 6 carbon atoms for the manufacture of a three-dimensional object comprising, consisting of or consisting essentially of a polyvinyl acetal using additive manufacturing, especially for 3D printing.

Yet another aspect of the present invention is a filament for use in 3D printing comprising, consisting essentially of or consisting of a polyvinyl acetal comprising at least two different acetal groups. Preferably, the acetal groups independently have 2 to 6 carbon atoms.

A last aspect of the present invention is a three-dimensional object obtained according to the inventive process comprising, consisting of or consisting essentially of a polyvinyl acetal wherein the polyvinyl acetal comprises at least two different acetal groups. Preferably, the acetal groups independently have 2 to 6 carbon atoms.

### Examples

### Filament production

The polyvinyl acetal resin is pelletized using a twin screw extruder for extrusion of strands cooled in a water bath and cut to pellets by means of a strand cutter. The pellets are dried at 30 ºC in a vacuum oven. A filament with a diameter of 1.75 mm is extruded using a Dr. Collin 30 mm single screw extruder with a 2 mm single hole die from these polyvinyl acetal pellets. The filaments were air cooled and wound onto a plastic spool. The spools were kept in a an desiccator until use for 3D printing.

### 3D printing and adhesion test

The specimens of Type 1A according to DIN EN ISO 527-2 are printed on a Felix Pro 2 3D printer using a nozzle with a diameter of 0.4 mm and the filaments extruded from the polyvinyl acetal material as described above at ambient outside temperature. The printing temperature is set to 230 °C. The printing speed is set to 10 mm/s for the first layer and 25 mm/s for further layers. The printing layer thickness is set to 200 µm. The build plate temperature is set to 70°C. The specimens are printed laying flat in the x-y-plane on the build plate and consist of 20 x 200 µm layers of polyvinyl acetal to achieve a total thickness of 4 mm. The structure of the printed sample consists of a 0.8 mm outer wall and an inner structure with 100% infill, which is printed in an alignment of 45° with regard to the wall. Upon completion of one print layer, the next following layer has an alignment which is flipped by 90° compared to the previous layer.

The tensile properties of these specimens are measured according to DIN EN ISO 527-1.

### Example 1 - mixed n-butyl/acetyl acetal

Mowital® polyvinyl acetal resin BA 55 HH obtained from Kuraray Europe GmbH, which contains acetal units prepared with both n-butyraldehyd and acetaldehyde, is used to prepare a filament as described above. The filament thus produced was used in the 3D printing process as described above. The engineering strain is measured on the resulting specimen.

### Example 2 - mixed n-butyl/acetyl acetal

Mowital® polyvinyl acetal resin Mowital® BA 20 S obtained from Kuraray Europe GmbH, which contains acetal units prepared with both n-butyraldehyde and acetaldehyde, is used to prepare a filament as described above. The filament thus produced was used in the 3D printing process as described above. The engineering strain is measured on the resulting specimen.

### Example 3 - mixed iso-butyl/acetyl acetal

720 g polyvinyl alcohol with a viscosity (4% in water) of 3.06 mPas and a degree of hydrolysis of 96.5 mol% was dissolved in 6480 ml of water. After adding 152.2 g acetaldehyde and 204.2 g iso-butyraldehyde, the reaction was started with the addition of 1330 ml 20% hydrochloric acid solution at 8 °C. Once the hydrochloric acid had been added, the reaction solution was heated to 36° C over a period of 2 hours and was kept at this temperature for a further 2 hours. The precipitated solid was filtered off and washed sufficiently with water. The product suspension was mixed with 40 ml 10% sodium hydroxide solution and slightly heated again. Excess base was removed by washing with water. The product was then dried and is used to prepare a filament as described above. The filament thus produced was used in the 3D printing process as described above. The engineering strain is measured on the resulting specimen.

### Example 4 - mixed n-butyl/acetyl acetal

720 g polyvinyl alcohol with a viscosity (4% in water) of 3.06 mPas and a degree of hydrolysis of 96.5 mol% was dissolved in 6480 ml water. After adding 152.2 g acetaldehyde and 204.2 g n-butyraldehyde, the reaction was started with the addition of 1330 ml 20% hydrochloric acid solution at 8 °C. Once the hydrochloric acid had been added, the reaction solution was heated to 36 °C over a period of 2 hours and was kept at this temperature for a further 2 hours. The precipitated solid was filtered off and washed sufficiently with water. The product suspension was mixed with 40 ml 10% sodium hydroxide solution and slightly heated again. Excess base was removed by washing with water. The product was then dried and is used to prepare a filament as described above. The filament thus produced was used in the 3D printing process as described above. The engineering strain is measured on the resulting specimen.

### Comparative Example 1 - n-butyl acetal

Mowital® polyvinyl acetal resin B60H obtained from Kuraray Europe GmbH, which contains acetal units prepared only with n-butyraldehyd, is used to prepare a filament as described above. The filament thus produced was used in the 3D printing process as described above. The engineering strain is measured on the resulting specimen.

### Comparative Example 2 - n-butyl acetal

684 g polyvinyl alcohol with a viscosity (4% in water) of 9.94 mPas and a degree of hydrolysis of 98.4 mol% was dissolved in 6552 ml water. After adding 400 g n-butyraldehyde, the reaction was started at 4° C with the addition of 780 ml 20% hydrochloric acid solution. Once the hydrochloric acid had been added, the reaction solution was heated to 48 °C over a period of 2 hours and was kept at this temperature for a further 2 hours. The precipitated solid was filtered off and washed sufficiently with water. The product suspension was mixed with 20 ml 10% sodium hydroxide solution and slightly heated again. Excess base was removed by washing with water. The product was then dried and is used to prepare a filament as described above. The filament thus produced was used in the 3D printing process as described above. The engineering strain is measured on the resulting specimen.

## Claims

1. A process for the additive manufacturing of a three-dimensional object wherein the three-dimensional object comprises, consists of or consists essentially of a polyvinyl acetal and wherein the polyvinyl acetal comprises at least two different acetal groups.

2. The process according to claim 1 wherein the acetal groups independently have 2 to 6 carbon atoms.

3. The process according to claim 1 or 2 wherein the additive manufacturing is 3D printing.

4. The process according to any one of claims 1 to 3 wherein the polyvinyl acetal comprises butyraldehyde and acetaldehyde acetal groups.

5. The process according to any one of claims 1 to 4 wherein the polyvinyl acetal is supplied to the manufacturing process in form of a filament, granules, beads or a powder.

6. The process according to any one of claims 1 to 5 wherein the polyvinyl acetal has a glass transition temperature (Tg) of 75 to 115 ºC.

7. The process according to any one of claims 1 to 6 wherein the polyvinyl acetal has a melting temperature (Tm) of 150 to 240 ºC.

8. The process according to any one of claims 1 to 7 wherein the polyvinyl acetal has a degree of acetalisation of 70 to 95%.

9. The process according to any one of claims 1 to 8 comprising
- a step of depositing and solidifying a molten thermoplastic polymer different from the polyvinyl acetal to form a support structure,
- depositing and solidifying the molten polyvinyl acetal onto the support structure to form a three-dimensional preform, and
- dissolving the support structure to form the three-dimensional object.

10. The process according to claim 9 wherein the thermoplastic polymer support structure comprises polyvinyl alcohol (PVOH).

11. Use of a polyvinyl acetal comprising at least two different acetal groups wherein the acetal groups independently have 2 to 6 carbon atoms for the manufacture of a three-dimensional object comprising, consisting of or consisting essentially of a polyvinyl acetal using additive manufacturing.

12. The use of claim 11 wherein the additive manufacturing is 3D printing.

13. A filament for use in 3D printing comprising, consisting essentially of or consisting of a polyvinyl acetal comprising at least two different acetal groups wherein the acetal groups independently have 2 to 6 carbon atoms.

14. A three-dimensional object obtained according to the process of any one of claims 1 to 10 comprising, consisting of or consisting essentially of a polyvinyl acetal wherein the polyvinyl acetal comprises at least two different acetal groups and the acetal groups independently have 2 to 6 carbon atoms.
